# EUROPEAN PATENT SPECIFICATION

(11) **EP 2 893 294 B1**
(45) Date of publication and mention of the grant of the patent: **26.07.2017**
(21) Application number: 13832296.1
(22) Date of filing: 28.08.2013
(51) Int. Cl.: G01B 21/26, B60W 30/10, B62D 15/02, B62D 5/04, G01M 17/06

(54) **METHOD OF DETECTING A STEERING FAULT, AND A STEERING FAULT DETECTION SYSTEM OF A VEHICLE'S STEERING SYSTEM**
VERFAHREN ZUR ERKENNUNG EINES LENKFEHLERS UND LENKFEHLERERKENNUNGSSYSTEM FÜR EIN FAHRZEUGLENKUNGSYSTEMS
PROCÉDÉ PERMETTANT DE DÉTECTER UN DÉFAUT DE DIRECTION, ET SYSTÈME DE DÉTECTION DE DÉFAUT DE DIRECTION D'UN SYSTÈME DE DIRECTION DE VÉHICULE

(30) Priority: 03.09.2012 SE 1250978
(43) Date of publication of application: 15.07.2015
(73) Proprietor: Scania CV AB, 151 87 Södertälje (SE)
(72) Inventor: PETTERSSON, Henrik, S-141 73 Segeltorp (SE); SAHLHOLM, Per, S-141 45 Huddinge (SE); JOHANSSON, Anders, S-146 31 Tullinge (SE); SANDBERG, Tony, S-645 44 Strängnäs (SE)
(86) International application number: PCT/SE2013/051002
(87) International publication number: WO 2014/035320

(56) References cited:
- EP-A1- 1 710 749
- WO-A1-2010/107344
- GB-A- 2 370 260
- GB-A- 2 370 260
- KR-B1- 100 774 669
- KR-B1- 100 774 669
- US-A1- 2011 178 671

## Description

### Field of the invention

The present invention relates to a method of detecting a steering fault and a steering fault detection system of a vehicle's steering system according to the preambles of the independent claims.

### Background to the invention

Steering a vehicle usually involves the driver turning the steering wheel by applying a force to turn the steering wheel to a desired angle corresponding to the direction in which the driver wishes the vehicle to travel. In a vehicle with a system with a direct connection between steering wheel and road wheels or with a system in which the steering is effected via a power servo, the force required to turn the steering wheel is a function of a given angular friction in the steering, a given setting of wheel angles and the friction and condition of the road. Similarly, unevenness of the carriageway and faults in the steering, e.g. plays, will also cause variation in the amount of force which needs to be applied to the steering wheel.

There are also currently systems to help the driver steer the vehicle, e.g. so-called "lane keep assist (LKA) systems" or "lane departure warning systems", which is generally denoted as an active driver steering support systems (ADSS-system). Such a system uses various types of sensors or detection systems (e.g. video cameras, lasers or infrared sensors) to ensure that the driver does not stray from the respective traffic lane. He/she is warned accordingly if the vehicle is about to leave its lane. The steering system may also actively steer the vehicle by controlling the steering wheel angle. As this type of system actively regulates the vehicle, it will help the driver to compensate for further adverse factors such as carriageway unevenness, strong side wind, etc. But the system will also compensate for faults in the steering system, e.g. incorrect wheel settings. This active steering by means of the steering system may cause the consequences of incorrect setting of road wheels, e.g. a tendency for the vehicle to move obliquely, to be concealed by the compensation effected by the active steering system. The inventors' of the present application have concluded that these systems thus make it more difficult to diagnose and detect faults.

More specifically, a lane keeping assist system detects lane markers on the road, and assists the driver's steering to help keep the vehicle between lane markers. When the system detects the vehicle straying from its lane, it alerts the driver visually as well as with a buzzer, while applying a slight counter-steering torque, trying to prevent the vehicle from moving out of its lane. The LKA-system often includes a vision sensor, which detects shapes and positions of lane markers and a so-called steering assist electronic control unit (ECU), which calculates a target steering torque based on the data from the vision sensor, and then sends a steering control signal to an electric power steering (EPS) unit, i.e. a steering servo unit of the vehicle, to control an EPS motor. The steering assist ECU further determines if it is necessary to alert the driver of the vehicle's deviation from the lane with a buzzer and a display.

In vehicles, incorrectly set wheel geometries and plays in steered axles or wheel suspensions lead to increased wear, particularly on tyres and bushings. When wear due to plays or incorrect settings has continued long enough, it is easy for the driver to detect, but cases of only slight wear may be difficult to detect, particularly if he/she drives the vehicle daily. Incorrectly set wheel geometries and/or plays are characterised by the steering torque varying so that there are for example differences in inertia when turning in different directions. Another problem may be that the steering torque does not follow the linear process intended by the steering system. For example, the steering may feel lighter at the beginning or end of the process.

Wear at an early stage may also be difficult to detect for staff that drive the vehicle on a single occasion (e.g. when the vehicle is test-run at a workshop). For staff to be able to detect plays or incorrect settings at an early stage, the vehicle may need to be run in various different driving situations.

Different methods and systems for detecting and indicating steering misalignment exist. These systems are often based upon detection of e.g. the steering angle and the steering wheel torque; see for example the following patent documents.

In GB-2,370,260 a steering misalignment system and method for a vehicle is known. The method comprises determining when the vehicle is in a condition of traveling in a substantially straight line; determining if a steering wheel torque is required to maintain the vehicle in the condition of traveling in a substantially straight line; and indicating a misalignment based upon the presence of such a steering wheel torque.

WO-2010/107344 relates to a method for on-board diagnosis of a wheel alignment of a vehicle. This is achieved by using at least one parameter indicative for misalignment which is selected from the group of steering angle, yaw rate, lateral acceleration, tyre friction side force, functional dependence of steering angle from yaw rate. If the parameter is changed more than a predetermined limit an alarm may be issued so that the driver of the vehicle is informed that a wheel misalignment was detected. Document KR100774669B is the closest prior art and shows the preamble of claims 1 and 6.

There is thus a problem in that vehicle components such as tyres and bushings undergo wear longer than necessary, which may lead to higher costs, inter alia through causing higher fuel consumption.

The general object of the present invention is therefore to make it easier and less expensive to detect, at an early stage, incorrectly set wheel geometries and plays in steered axles or wheel suspensions.

A specific object of the present invention is to detect faults in the steering system at an early stage on vehicles using active driver steering support systems, e.g. so-called lane keeping assist systems (LKA-systems).

### Summary of the invention

The above objects are achieved with the invention defined by the independent claims. Preferred embodiments are defined by the dependent claims.

The present invention is based upon the inventors' insight that a steering fault may be detected by analysing the steering assist control signal generated by the ADSS-system.

Thus, according the present invention a steering assist control signal is analysed by comparing one or many control values of that signal to predetermined ideal control values.

The ADSS system is adapted to receive one or many environmental signals, e.g. from one or many cameras, laser measurement devices, an acceleration signal and/or positioning systems (GPS). The environmental signals include e.g. information related to the own vehicle's position in relation to lane markers, and the distance to other vehicles. In addition the ADSS system is adapted to receive a steering activity signal generated in response of a steering activity, which signal is generated when the driver turns the steering wheel, i.e. performs a steering activity. The ADSS system is adapted to generate a steering assist control signal in dependence of one or many of the applied environmental signals, the steering activity signal by applying a driving assist algorithm from a set of driving assist algorithms.

According to the present invention the steering fault detection system is adapted to analyse the steering assist control signal generated by the ADSS system. If one or many steering assist control values of the steering control signal deviates from a set of predetermined ideal steering assist control values an indication signal is generated which indicates that a steering fault is detected.

Thus, the invention relates to a method in a steering fault detection system for detection of a steering fault of a vehicle, the vehicle comprises an active driver steering support (ADSS) system, e.g. a lane keeping assist (LKA) system, adapted to assist steering the vehicle at least in dependence of one environmental signal, e.g. a camera signal, and to generate a steering assist control signal to a steering servo system of the vehicle, wherein said steering assist control signal includes one or many steering assist control values, characterized in that the method comprises:
Applying said steering assist control signal to said steering fault detection system; Analysing said steering assist control values in relation to predetermined ideal steering assist control values, and
Generating an indication signal in dependence of said analysis, wherein said indication signal includes steering fault information. The steering fault information includes e.g. the magnitude and direction of the steering fault, which is used to identify e.g. incorrectly set wheel geometries and plays in steered axles or wheel suspensions.

The predetermined ideal steering assist control values may be considered as ideal values, i.e. the values that would be used if essentially no steering faults exist.

These ideal steering assist control values may e.g. be detected and stored during the final testing of the vehicle before it is delivered from the factory, i.e. when essentially no steering faults should be present.

According to one embodiment the ideal steering assist control values are stored in a table in a memory unit of the steering fault detection system.

Thus, if the steering assist control values of the steering assist control signal deviate from expected ideal values an indication of a possible steering fault is generated. Further analysis, e.g. at a workshop, may then be necessary in order to determine what actions to be performed.

The method and system according to the present invention is applicable irrespectively if the vehicle is driving in a straight or curved direction.

The expression faults in the steering system are to be interpreted broadly, and include e.g. incorrectly set wheel geometries and plays in steered axles or wheel suspensions.

By implementing the present invention it is possible to detect wear and incorrect wheel settings at an early stage. Less wear and less fuel consumption are thus achieved. Higher fuel consumption or increased wear may be due to the vehicle tending to move obliquely because road wheels are positioned obliquely even when the steering wheel has not been turned in any direction, or when the vehicle's running is unstable, e.g. when the carriageway slopes.

### Brief description of drawings

Figure 1 is a block diagram schematically illustrating steering fault detection system according to the present invention.
Figure 2 is a flow diagram illustrating the method according to the present invention.

### Detailed description of preferred embodiments of the invention

With references to the appended drawings the invention will now be described in detail.

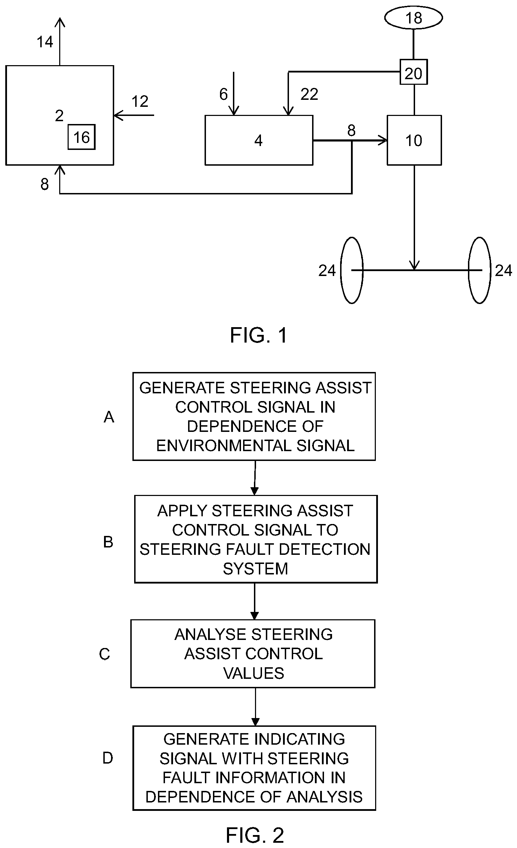

In figure 1 a schematic block diagram is shown where the steering fault detection system 2 is illustrated for detection of a steering fault of a vehicle. The vehicle comprises an active driver steering support (ADSS) system 4, e.g. a lane keeping assist (LKA) system, adapted to assist steering the vehicle at least in dependence of one environmental signal 6, e.g. a camera signal, a laser measurement signal, an acceleration signal and/or a positioning signal (GPS-signal). The driver applies a steering activity on the steering wheel 18 and the steering activity is applied to a steering servo system 10. The steering servo system 10 is capable of control the steering by using a steering assist control signal from an ADSS system in combination with steering activity information related to the driver's steering activity. A measurement unit 20 is adapted to sense one or many parameters representing the steering activity, e.g. the steering angle and/or the yaw rate and to generate a steering activity signal 22 in dependence of the sensed parameter(s). The steering activity signal 22 is applied to the ADSS system 4. Thus, the steering activity signal includes a representation of the driver's steering activity, i.e. the intention of the driver.

The ADSS system is adapted to generate a steering assist control signal 8 to a steering servo system 10 of the vehicle, wherein the steering assist control signal 8 includes one or many steering assist control values. The steering servo system then controls the steering of the road wheels 24. This is in accordance with the generally known use of ADSS systems.

According to the invention the steering fault detection system 2 is adapted to receive the steering assist control signal 8 and to analyse the steering assist control values in relation to predetermined ideal steering assist control values 12. An indication signal 14 is adapted to be generated by said steering fault detection system 2 in dependence of the result of the analysis, wherein the indication signal includes steering fault information.

Preferably, the predetermined ideal steering assist control values 12 are values that would be used if essentially no steering faults exist.

According to one embodiment the ideal steering assist control values 12 are determined during final testing of the vehicle before it is delivered from the factory and then stored in a table in a memory unit 16 of the steering fault detection system.

Alternatively, the ideal steering assist control values may be calculated in real-time based upon the present situation, by using the current environmental signal 6 and the current steering activity signal 22. In that case those signals are applied directly to the steering fault detection system 2, which is indicated in figure 1 by dashed arrows.
In an exemplary situation where the environmental signal 6 indicates that the vehicle is moving straight ahead the mean ideal steering activity control signal 8 should be approximately zero over a specified time period. However, if the control signal 8 deviates more than a pre-set threshold from zero it is an indication that a steering fault might exist and an indication signal should be generated.
The indicating signal is thus the result of analysis of the steering assist control values in relation to the ideal steering assist control values. The difference between these values defines a differential signal that may for example be allowed to deviate from pre-set threshold values.

According to one embodiment the indication signal 14 is stored in the memory unit 16 and is later analysed over time, e.g. to identified long term trends in relation to the ideal steering assist control values. This analysis may preferably be performed at a workshop during a scheduled service.

In addition, or as an alternative, the indication signal 14 is generated and displayed to the driver in order to indicate that a steering fault might exist. The steering fault information includes e.g. the type of the steering fault and/or the magnitude of the steering fault.

Thus, the indication signal 14 may be communicated to the vehicle's driver. It may also be communicated to servicing staff, e.g. at the respective servicing workshop. This may for example be achieved by wireless transfer to a mobile telephone, a driving computer or other computer. This indication signal may cause various types of warnings to be issued. One type of indication signal might mean that there is a dangerous deviation in the steering system which may require the vehicle to go immediately to a workshop because the detected state of the steering system might for safety reasons lead to having to discontinue the journey. Another type of indication signal might entail shortening of the interval before the next service. A further type of indication signal might mean the vehicle having to go to a workshop but on the basis of an assessment that the problem may be left until the next service. In the first two cases it is desirable that the indication signal is communicated to both the driver and the workshop staff. In the third case it is sufficient that the signal is communicated to the driver.

The present invention also relates to a method in a steering fault detection system for detection of a steering fault of a vehicle. The method will now be described with references to the flow diagram shown in figure 2.
As described above the vehicle comprises an ADSS system adapted to assist steering the vehicle at least in dependence of one environmental signal, e.g. a camera signal, and to generate a steering assist control signal to a steering servo system of the vehicle (step A), wherein said steering assist control signal includes one or many steering assist control values.
The method according to the invention comprises:
B - applying said steering assist control signal to said steering fault detection system;
C - analysing said steering assist control values in relation to predetermined ideal steering assist control values, and
D - generating an indication signal in dependence of said analysis, wherein said indication signal includes steering fault information.

The predetermined ideal steering assist control values are preferably values that would be used if essentially no steering faults exist and may be determined during final testing of the vehicle before it is delivered from the factory.

According to one embodiment the predetermined ideal steering assist control values are stored in a table in a memory unit of the steering fault detection system. The indication signal may also be stored in the memory unit to be later analysed over time e.g. to identify long term trends.
The steering fault information of the indication signal includes the type of fault and/or the magnitude of fault. The type of fault typically includes information of the direction of the steering fault which in turn may be used to further diagnose the fault, e.g. a specific bushing or bearing has been worn out.

In addition the present invention relates to a computer program product comprising computer program instructions for applying the method described above.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A method in a steering fault detection system adapted to detect a steering fault of a vehicle, the vehicle comprises an active steering support system adapted to assist steering the vehicle at least in dependence of one environmental signal and to generate a steering assist control signal to a steering servo system of the vehicle (A), wherein said steering assist control signal includes one or many steering assist control values, wherein the method comprises:
B - applying said steering assist control signal to said steering fault detection system;
C - analysing said steering assist control values in relation to predetermined ideal steering assist control values, and
D - generating an indication signal in dependence of said analysis, wherein said indication signal includes steering fault information, **characterized in that** said steering fault information
includes type of fault and/or magnitude of fault which is used to identify incorrectly set wheel geometries and plays in steered axles or wheel suspensions.

2. The method according to claim 1, wherein said predetermined ideal steering assist control values are values that would be used if essentially no steering faults exist.

3. The method according to claim 1 or 2, wherein said predetermined ideal steering assist control values are determined during final testing of the vehicle before it is delivered from the factory.

4. The method according to any of claims 1-3, wherein said predetermined ideal steering assist control values are stored in a table in a memory unit of the steering fault detection system.

5. The method according to claim any preceding claim, wherein said indication signal is stored and is later analysed over time.

6. A steering fault detection system (2) adapted to detect a steering fault of a vehicle, the vehicle comprises an active driver steering support system (4) adapted to assist steering the vehicle at least in dependence of one environmental signal (6) and to generate a steering assist control signal (8) to a steering servo system (10) of the vehicle, wherein said steering assist control signal (8) includes one or many steering assist control values, wherein said steering fault detection system (2) is adapted to receive said steering assist control signal (8) and to analyse said steering assist control values in relation to predetermined ideal steering assist control values (12), and that an indication signal (14) is adapted to be generated by said steering fault detection system (2) in dependence of said analysis, wherein said indication signal includes steering fault information, **characterized in that** said steering fault information includes type of fault and/or magnitude of fault which is used to identify incorrectly set wheel geometries and plays in steered axles or wheel suspensions.

7. The steering fault detection system according to claim 6, wherein said predetermined ideal steering assist control values (12) are values that would be used if essentially no steering faults exist.

8. The steering fault detection system according to claim 6 or 7, wherein said predetermined ideal steering assist control values (12) are determined during final testing of the vehicle before it is delivered from the factory.

9. The steering fault detection system according to any of claims 6-8, wherein said steering fault detection system includes a memory unit (16) adapted to store said predetermined ideal steering assist control values (12) in a table in said memory unit (16).

10. The steering fault detection system according to any of claims 6-9, wherein said steering fault detection system includes a memory unit (16) adapted to store said indication signal (14), which is later analysed over time to identify long term trends.

11. A computer program product comprising computer program instructions for applying the method according to any of claims 1-5.

## Patentansprüche

1. Verfahren in einem Lenkfehlererkennungssystem, das zum Erkennen eines Lenkfehlers eines Fahrzeugs eingerichtet ist, wobei das Fahrzeug ein aktives Lenkunterstützungssystem aufweist, das zur Unterstützung der Lenkung des Fahrzeugs zumindest in Abhängigkeit von einem Umgebungssignal und zum Erzeugen eines Lenkhilfe-Steuersignals an das Servo-Lenksystem des Fahrzeugs eingerichtet ist, A) wobei das Lenkhilfe-Steuersignal einen oder zahlreiche Lenkhilfe-Steuerwerte enthält,
wobei das Verfahren aufweist:
B - Anlegen des Lenkhilfe-Steuersignals an das Lenkfehlererkennungssystem;
C - Analysieren der Lenkhilfe-Steuerwerte in Bezug auf vorgegebene ideale Lenkhilfe-Steuerwerte, und
D - Erzeugen eines Meldesignals in Abhängigkeit von der Analyse, wobei das Meldesignal Lenkfehlerinformationen enthält,
**dadurch gekennzeichnet, dass** die Lenkfehlerinformationen den Fehlertyp und/oder die Größe des Fehlers enthalten, die dazu dienen, falsch eingestellte Radgeometrien und -spiele von Lenkachsen oder Radaufhängungen zu identifizieren.

2. Verfahren nach Anspruch 1, wobei die vorgegebenen idealen Lenkhilfe-Steuerwerte Werte sind, die angewendet würden, wenn im Wesentlichen kein Lenkfehler vorläge.

3. Verfahren nach Anspruch 1 oder 2, wobei die vorgegebenen idealen Lenkhilfe-Steuerwerte während der Endprüfung des Fahrzeugs vor der Auslieferung ab Werk bestimmt werden.

4. Verfahren nach einem der Ansprüche 1 bis 3, wobei die vorgegebenen idealen Lenkhilfe-Steuerwerte in einer Tabelle in einer Speichereinheit des Lenkfehlererkennungssystems gespeichert werden.

5. Verfahren nach einem der vorigen Ansprüche, wobei das Meldesignal gespeichert und später im Zeitverlauf analysiert wird.

6. Lenkfehlererkennungssystem (2), das zum Erkennen eines Lenkfehlers eines Fahrzeugs eingerichtet ist, wobei das Fahrzeug ein aktives Lenkunterstützungssystem (4) aufweist, das zur Unterstützung der Lenkung des Fahrzeugs zumindest in Abhängigkeit von einem Umgebungssignal (6) und zum Erzeugen eines Lenkhilfe-Steuersignals (8) an ein Servo-Lenksystem (10) des Fahrzeugs eingerichtet ist, wobei das Lenkhilfe-Steuersignal (8) einen oder zahlreiche Lenkhilfe-Steuerwerte enthält, wobei das Lenkfehlererkennungssystem (2) zum Empfangen des Lenkhilfe-Steuersignals (8) und zum Analysieren der Lenkhilfe-Steuerwerte (12) in Bezug auf vorgegebene ideale Lenkhilfe-Steuerwerte (12) eingerichtet ist, und wobei ein Meldesignal (14) vom Lenkfehlererkennungssystem (2) in Abhängigkeit von der Analyse erzeugt wird, wobei das Meldesignal Lenkfehlerinformationen enthält,
**dadurch gekennzeichnet, dass** die Lenkfehlerinformationen den Fehlertyp und/oder die Größe des Fehlers enthalten, die dazu dienen, falsch eingestellte Radgeometrien und -spiele von Lenkachsen oder Radaufhängungen zu identifizieren.

7. Lenkfehlererkennungssystem nach Anspruch 6, wobei die vorgegebenen idealen Lenkhilfe-Steuerwerte (12) Werte sind, die angewendet würden, wenn im Wesentlichen kein Lenkfehler vorläge.

8. Lenkfehlererkennungssystem nach Anspruch 6 oder 7, wobei die vorgegebenen idealen Lenkhilfe-Steuerwerte (12) während der Endprüfung des Fahrzeugs vor der Auslieferung ab Werk bestimmt werden.

9. Lenkfehlererkennungssystem nach einem der Ansprüche 6 bis 8, wobei das Lenkfehlererkennungssystem eine Speichereinheit (16) aufweist, die zum Speichern der vorgegebenen idealen Lenkhilfe-Steuerwerte (12) in einer Tabelle in der Speichereinheit (16) eingerichtet ist.

10. Lenkfehlererkennungssystem nach einem der Ansprüche 6 bis 9, wobei das Lenkfehlererkennungssystem eine Speichereinheit (16) aufweist, die zum Speichern des Meldesignals (14) eingerichtet ist, das später im Zeitverlauf zur Identifizierung langfristiger Tendenzen analysiert wird.

11. Computerprogrammprodukt, das Computerprogrammanweisungen aufweist, um das Verfahren nach einem der Ansprüche 1 bis 5 auszuführen.

## Revendications

1. Procédé dans un système de détection de défaut de direction adapté de façon à détecter un défaut de direction d'un véhicule, le véhicule comprenant un système de support de direction actif adapté de façon à assister la direction du véhicule au moins en fonction d'un signal environnemental, et à générer un signal de commande d'assistance de direction pour un système d'asservissement de direction du véhicule (A), dans lequel ledit signal de commande d'assistance de direction comprend une ou plusieurs valeurs de commande d'assistance de direction, dans lequel le procédé comprend :
B - l'application dudit signal de commande d'assistance de direction audit système de détection de défaut de direction ;
C - l'analyse desdites valeurs de commande d'assistance de direction par rapport à des valeurs de commande d'assistance de direction idéales prédéterminées, et
D - la génération d'un signal d'indication en fonction de ladite analyse, dans lequel ledit signal d'indication comprend une information de défaut de direction, **caractérisé en ce que** :
ladite information de défaut de direction comprend un type de défaut et/ou une magnitude de défaut qui est utilisé pour identifier des géométries de roues réglées de façon incorrecte et des jeux dans des essieux dirigés ou des suspensions de roue.

2. Procédé selon la revendication 1, dans lequel lesdites valeurs de commande d'assistance de direction idéales prédéterminées sont des valeurs qui seraient utilisées s'il n'existe essentiellement aucun défaut de direction.

3. Procédé selon la revendication 1 ou 2, dans lequel lesdites valeurs de commande d'assistance de direction idéales prédéterminées sont déterminées au cours d'un test final du véhicule, avant qu'il ne soit livré à partir de l'usine.

4. Procédé selon l'une quelconque des revendications 1 à 3, dans lequel lesdites valeurs de commande d'assistance de direction idéales prédéterminées sont mémorisées dans une table dans une unité de mémoire du système de détection de défaut de direction.

5. Procédé selon l'une quelconque des revendications précédentes, dans lequel ledit signal d'indication est mémorisé, puis est ensuite analysé au cours du temps.

6. Système de détection de défaut de direction (2) adapté de façon à détecter un défaut de direction d'un véhicule, le véhicule comprenant un système de support de direction de conducteur actif (4) adapté de façon à assister la direction du véhicule au moins en fonction d'un signal environnemental (6), et à générer un signal de commande d'assistance de direction (8) pour un système d'asservissement de direction (10) du véhicule, dans lequel ledit signal de commande d'assistance de direction (8) comprend une ou plusieurs valeurs de commande d'assistance de direction, dans lequel ledit système de détection de défaut de direction (2) est adapté de façon à recevoir ledit signal de commande d'assistance de direction (8) et à analyser lesdites valeurs de commande d'assistance de direction par rapport à des valeurs de commande d'assistance de direction idéales prédéterminées (12), et un signal d'indication (14) étant adapté de façon à être généré par ledit système de détection de défaut de direction (2) en fonction de ladite analyse, dans lequel ledit signal d'indication comprend une information de défaut de direction, **caractérisé en ce que** ladite information de défaut de direction comprend un type de défaut et/ou une ampleur de défaut qui est utilisé pour identifier des géométries de roues réglées de façon incorrecte et des jeux dans des essieux dirigés ou des suspensions de roue.

7. Système de détection de défaut de direction selon la revendication 6, dans lequel lesdites valeurs de commande d'assistance de direction idéales prédéterminées (12) sont des valeurs qui seraient utilisées s'il n'existe essentiellement aucun défaut de direction.

8. Système de détection de défaut de direction selon la revendication 6 ou 7, dans lequel lesdites valeurs de commande d'assistance de direction idéales prédéterminées (12) sont déterminées au cours d'un test final du véhicule, avant qu'il ne soit livré à partir de l'usine.

9. Système de détection de défaut de direction selon l'une quelconque des revendications 6 à 8, dans lequel ledit système de détection de défaut de direction comprend une unité de mémoire (16) adaptée de façon à mémoriser lesdites valeurs de commande d'assistance de direction idéales prédéterminées (12) dans une table dans ladite unité de mémoire (16).

10. Système de détection de défaut de direction selon l'une quelconque des revendications 6 à 9, dans lequel ledit système de détection de défaut de direction comprend une unité de mémoire (16) adaptée de façon à mémoriser ledit signal d'indication (14), qui est ensuite analysé au cours du temps afin d'identifier des tendances à long terme.

11. Produit de programme informatique comprenant des instructions de programme informatique pour appliquer le procédé selon l'une quelconque des revendications 1 à 5.
